# EUROPÄISCHE PATENTSCHRIFT

(11) **EP 1 449 961 B1**
(45) Veröffentlichungstag und Bekanntmachung des Hinweises auf die Patenterteilung: **22.10.2008**
(21) Anmeldenummer: 04405227.2
(22) Anmeldetag: 14.04.2004
(51) Int. Cl.: E01B 9/14, F16B 13/00

(54) **Spreizeinlage für Schwellenschraube**
Expansion insert for sleeper screws
Pièce d'insertion à expansion pour vis de traverse

(30) Priorität: 04.11.2003 CH 18922003
(43) Veröffentlichungstag der Anmeldung: 25.08.2004
(73) Patentinhaber: Sersa AG, 8004 Zürich (CH)
(72) Erfinder: Schnyder, Konrad, 8730 Uznach (CH)
(74) Vertreter: Clerc, Natalia

(56) Entgegenhaltungen:
- CH-A- 514 734
- GB-A- 423 944

## Beschreibung

### Technisches Gebiet

Die Erfindung betrifft eine Spreizeinlage für Schwellenschrauben gemäss Oberbegriff des Patentanspruchs 1.

### Stand der Technik

Durch Beanspruchung der Eisenbahngleise lockern sich die Schwellenschrauben. Die Spur- und Leitweiten wie auch die Schienenhöhe ändern sich. Bei der Sanierung der Gleise wird der feste Schraubensitz wieder hergestellt, indem die alten Schwellenschrauben entfernt werden und das Loch aufgebohrt und gereinigt wird. Anschliessend wird die Spreizeinlage in dieses Loch eingebracht. Das Loch wird mit einer Vergussmasse gefüllt und anschliessend wird eine neue Schwellenschraube eingedreht, wobei die Spreizeinlage der neuen Schwellenschraube einen festen Halt bietet. Um die Spurhöhe zu korrigieren, wird üblicherweise vor dem Vergiessen des Lochs eine Unterlagsplatte, vorzugsweise eine Lupolen-Unterlage, auf die Schwelle gelegt.

Dieses Verfahren und die Verwendung der Spreizeinlage hat sich nunmehr während vielen Jahren bewährt. Das Verfahren ist unter dem Namen Traversan-Schwellensanierung bekannt. Das Verfahren und die zugehörige Spreizeinlage sind ebenfalls in CH 514'734 beschrieben.

Für Schwellenschrauben mit stumpfen Schrauben wird in CH 514'734 vorgeschlagen eine Spreizeinlage gemäss Figur 5 zu verwenden, welche die Form einer Schraubenfeder aufweist.

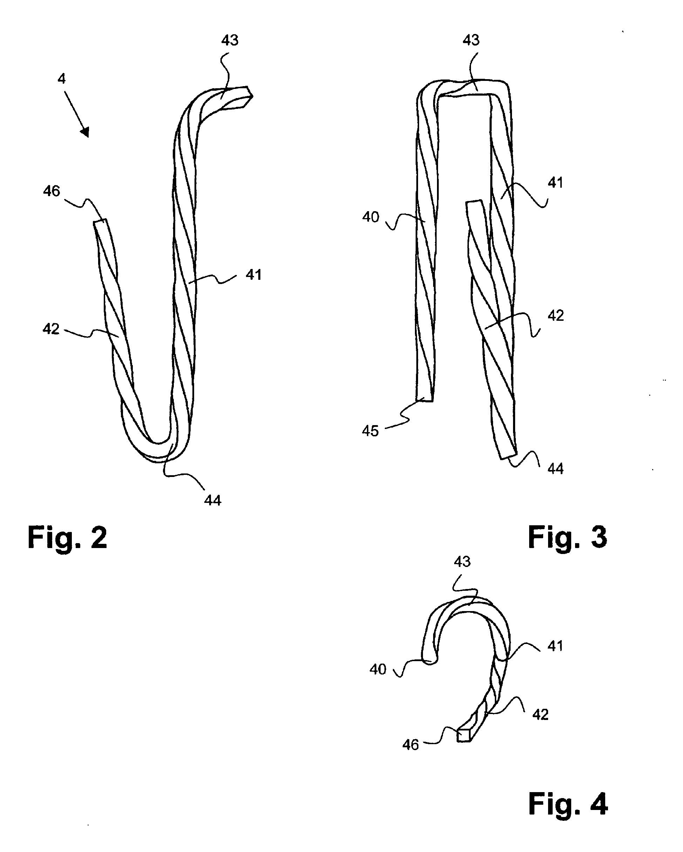

Für spitze Schrauben wird eine Spreizeinlage gemäss Figur 3 verwendet. Diese Spreizeinlage weist drei achsparallele Schenkel auf, welche aus einem einstückigen Stabmaterial gebogen sind. Ein im eingebauten Zustand der Spreizeinlage oberes freies Ende ist im wesentlichen waagrecht abgebogen. Diese Abbiegung oder Klinke sollte von der Schraube gefasst werden und als zusätzliche Schraubenführung dienen.

### Darstellung der Erfindung

Es ist eine Aufgabe der Erfindung, die Zugfestigkeit der Anordnung zu erhöhen und eine Verwendung von Schrauben mit stumpfen Schraubenenden zu ermöglichen.

Diese Aufgabe löst eine Spreizeinlage mit den Merkmalen des Patentanspruchs 1.

Die erfindungsgemässe Spreizeinlage für Schwellenschrauben ist aus einem Stabmaterial gebogen und weist zwei über einen Steg miteinander verbundene, mindestens annähernd parallel zueinander verlaufende erste und zweite Schenkel sowie einen über einen Bogen mit dem zweiten Schenkel verbundenen dritten Schenkel auf. Erfindungsgemäss besitzt der dritte Schenkel ein freies Ende, welches eine mindestens annähernd geradlinige Verlängerung des dritten Schenkels bildet.

Es wurde erkannt, dass die Spreizeinlage gemäss Figur 3 der CH 514'734 den Nachteil aufweist, dass ihre Abbiegung beim Einführen der Schrauben hinuntergestossen werden kann. Diese Gefahr ist insbesondere bei Verwendung von Schwellenschrauben mit stumpfen Enden erhöht. Wird die Abbiegung jedoch hinuntergebogen, schwächt dies die Zugfestigkeit der Anordnung und somit den Sitz der Schwellenschrauben.

Ferner wurde erkannt, dass die genannten Vorteile der Abbiegung nicht von Bedeutung sind und die Spreizeinlage ohne eine derartige Abbiegung zu verbesserten Resultaten führt.

Die Zugfestigkeit ist zusätzlich erhöht, wenn der dritte Schenkel länger ausgebildet ist als im Stand der Technik, insbesondere wenn er mindestens Zweidrittel der Länge der Spreizeinlage aufweist. Dies ist auch der Fall, wenn der dritte Schenkel in einem spitzen Winkel zum zweiten Schenkel verläuft.

Vorteilhaft ist ferner, dass sich diese Spreizeinlage einfach fertigen lässt.

Weitere vorteilhafte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, erläutert. Es zeigen:
- Figuren 1: einen Querschnitt durch eine Eisenbahnschiene mit erfindungsgemässen Spreizeinlagen;
- Figur 2: eine Ansicht der erfindungsgemässen Spreizeinlage von einer ersten Seite;
- Figur 3: einen Ansicht von einer zweiten Seite und
- Figur 4: eine Ansicht von oben.

### Wege zur Ausführung der Erfindung

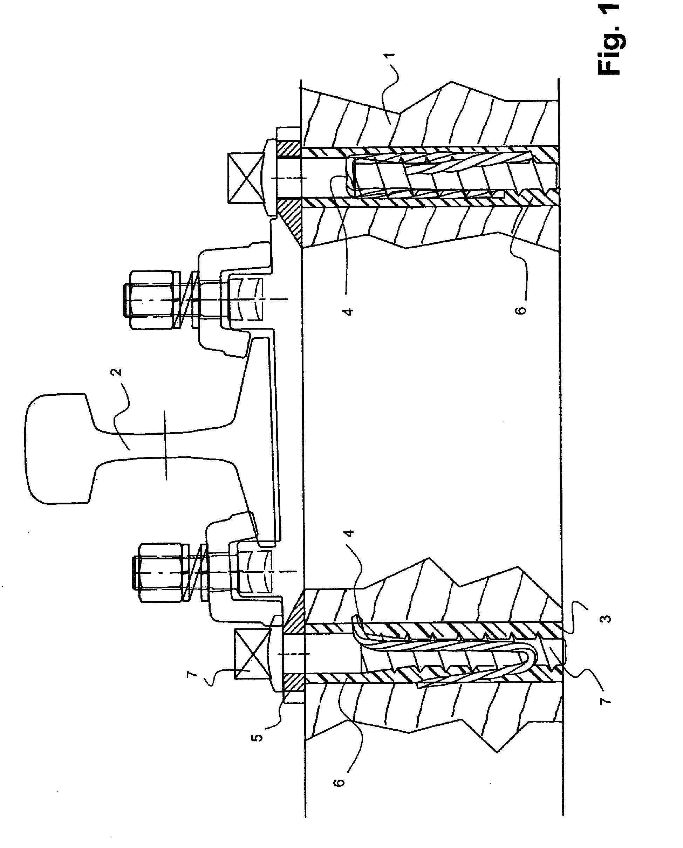

In Figur 1 ist ein Gleisausschnitt durch eine Eisenbahnlinie dargestellt. Auf einer Schwelle 1 ist eine Schiene 2 auf einer Rippenplatte 5 mittels Schwellenschrauben 7 befestigt. Hierzu sind Bohrungen 3 in der Schwelle 1 angebracht, in welchen die Schwellenschrauben 7 fixiert sind. Bei der Erneuerung des festen Schraubensitzes ist zur Fixierung der Schwellenschrauben 7 in den Bohrungen 3 jeweils eine Spreizeinlage 4 versenkt und mittels einer Vergussmasse 6 in dieser wasserdicht vergossen.

In den Figuren 2 bis 4 ist die erfindungsgemässe Spreizeinlage 4 dargestellt. Sie ist aus einem einstückigen Stabmaterial gebogen, vorzugsweise aus Spezialstahl, wie er auch für Armierungseisen eingesetzt werden kann.

Sie weist drei Schenkel 40, 41, 42 auf, welche leicht federnd zueinander ausgebildet sind. Ein erster und ein zweiter Schenkel 40, 41 verlaufen mindestens annähernd, hier genau, parallel zueinander. Der erste und zweite Schenkel 40, 41 sind über einen Steg 43 miteinander verbunden. Dieser Steg 43 ist in einer Ebene senkrecht zur Längsrichtung dieser zwei Schenkel 40, 41 gebogen ausgebildet, wie dies am besten in Figur 4 erkennbar ist. Der erste und der zweite Schenkel 40, 41 stehen dabei mindestens annähernd, vorzugsweise genau, senkrecht vom Steg 43 ab.

Der erste Schenkel 40 weist ein erstes freies Ende 45 auf, welches mindestens annähernd, vorzugsweise genau, eine geradlinige Verlängerung dieses Schenkels 40 bildet.

Der zweite Schenkel 41 ist vorzugsweise länger ausgebildet als der erste Schenkel 40, wie dies in Figur 2 erkennbar ist. Mit diesem zweiten Schenkel 41 ist über einen Bogen 44 ein dritter Schenkel 42 verbunden, welcher kürzer ausgebildet ist als die zwei anderen Schenkel 40, 41. Er erstreckt sich jedoch vorzugsweise über mindestens Zweidrittel der Länge der Spreizeinlage 4.

Dieser dritte Schenkel 42 weist erfindungsgemäss ein zweites freies Ende 46 auf, welches eine mindestens annähernd, vorzugsweise genaue, geradlinige Verlängerung des dritten Schenkels 42 bildet und somit keine Abbiegung oder Klinke bildet. Der dritte Schenkel 42 verläuft vorzugsweise in einem spitzen Winkel zum zweiten Schenkel 41, wie dies am besten in Figur 3 erkennbar ist.

Die erfindungsgemässe Spreizeinlage erhöht dank fehlender Abbiegung des dritten Schenkels die Zugfestigkeit der Anordnung und ist auch für Schwellenschrauben mit stumpfen Enden einsetzbar.

### Bezugszeichenliste

- 1: Schwelle
- 2: Schiene
- 3: Bohrung
- 4: Spreizeinlage
- 40: erster Schenkel
- 41: zweiter Schenkel
- 42: dritter Schenkel
- 43: Steg
- 44: Bogen
- 45: Erstes freies Ende
- 46: Zweites freies Ende
- 5: Rippenplatte
- 6: Vergussmasse
- 7: Schwellenschraube

## Patentansprüche

1. Spreizeinlage für Schwellenschrauben, wobei die Spreizeinlage aus einem Stabmaterial gebogen ist, zwei über einen Steg (43) miteinander verbundene, mindestens annähernd parallel zueinander verlaufende erste und zweite Schenkel (40, 41) sowie einen über einen Bogen (44) mit dem zweiten Schenkel (41) verbundenen dritten Schenkel (42) aufweist, **dadurch gekennzeichnet, dass** der dritte Schenkel (42) ein freies Ende (46) aufweist, welches eine mindestens annähernd geradlinige Verlängerung des dritten Schenkels (42) bildet.

2. Spreizeinlage nach Anspruch 1, wobei das freie Ende (46) des dritten Schenkels (42) genau eine geradlinige Verlängerung des dritten Schenkels (42) bildet.

3. Spreizeinlage nach einem der Ansprüche 1 oder 2, wobei der erste Schenkel (40) ein freies Ende (45) aufweist, welches mindestens annähernd, vorzugsweise genau, eine geradlinige Verlängerung des ersten Schenkels (40) bildet.

4. Spreizeinlage nach einem der Ansprüche 1 bis 3, wobei sie einstückig aus einem Stabmaterial hergestellt ist.

5. Spreizeinlage nach einem der Ansprüche 1 bis 4, wobei der Steg (43) in einer Ebene senkrecht zur Längsrichtung des ersten und zweiten Schenkels (40, 41) gebogen ausgebildet ist.

6. Spreizeinlage nach einem der Ansprüche 1 bis 5, wobei der ersten und zweite Schenkel (40, 41) mindestens annähernd senkrecht vom Steg (43) abstehen.

7. Spreizeinlage nach einem der Ansprüche 1 bis 6, wobei der dritte Schenkel (42) in einem spitzen Winkel zum zweiten Schenkel (41) verläuft.

8. Spreizeinlage nach einem der Ansprüche 1 bis 7, wobei der dritte Schenkel (42) kürzer ausgebildet ist als der erste und zweite Schenkel (40, 41).

9. Spreizeinlage nach einem der Ansprüche 1 bis 8, wobei sich der dritte Schenkel (42) über mindestens Zweidrittel der Länge der Spreizeinlage erstreckt.

10. Spreizeinlage nach einem der Ansprüche 1 bis 9, wobei der zweite Schenkel (41) länger ausgebildet ist als der erste Schenkel (40).

## Claims

1. Expansion insert for sleeper screws, wherein the expansion insert is bent from a bar material and has two first and second legs (40, 41), connected to one another via a web (43) and running at least approximately parallel to one another, and a third leg (42) connected to the second leg (41) via a bend (44), **characterized in that** the third leg (42) has a free end (46) which forms an at least approximately rectilinear extension of the third leg (42).

2. Expansion insert according to Claim 1, wherein the free end (46) of the third leg (42) forms exactly a rectilinear extension of the third leg (42).

3. Expansion insert according to either of Claims 1 and 2, wherein the first leg (40) has a free end (45) which forms at least approximately, preferably exactly, a rectilinear extension of the first leg (40).

4. Expansion insert according to one of Claims 1 to 3, wherein it is made in one piece from a bar material.

5. Expansion insert according to one of Claims 1 to 4, wherein the web (43) is designed to be bent in a plane perpendicular to the longitudinal direction of the first and the second leg (40, 41).

6. Expansion insert according to one of Claims 1 to 5, wherein the first and the second leg (40, 41) project at least approximately perpendicularly from the web (43).

7. Expansion insert according to one of Claims 1 to 6, wherein the third leg (42) runs at an acute angle to the second leg (41).

8. Expansion insert according to one of Claims 1 to 7, wherein the third leg (42) is designed to be shorter than the first and the second leg (40, 41).

9. Expansion insert according to one of Claims 1 to 8, wherein the third leg (42) extends over at least two thirds of the length of the expansion insert.

10. Expansion insert according to one of Claims 1 to 9, wherein the second leg (41) is designed to be longer than the first leg (40).

## Revendications

1. Insert d'expansion pour vis de traverses, l'insert d'expansion étant cintré à partir d'un matériau en barre, présentant deux première et deuxième branches (40, 41) connectées l'une à l'autre par le biais d'une âme (43), s'étant au moins approximativement parallèlement l'une à l'autre, ainsi qu'une troisième branche (42) connectée à la deuxième branche (41) par le biais d'un arc (44), **caractérisé en ce que** la troisième branche (42) présente une extrémité libre (46) qui forme une prolongation au moins approximativement rectiligne de la troisième branche (42).

2. Insert d'expansion selon la revendication 1, dans lequel l'extrémité libre (46) de la troisième branche (42) forme exactement une prolongation rectiligne de la troisième branche (42).

3. Insert d'expansion selon l'une quelconque des revendications 1 ou 2, dans lequel la première branche (40) présente une extrémité libre (45), qui forme au moins approximativement, de préférence exactement, une prolongation rectiligne de la première branche (40).

4. Insert d'expansion selon l'une quelconque des revendications 1 à 3, l'insert d'expansion étant fabriqué d'une seule pièce en un matériau en barre.

5. Insert d'expansion selon l'une quelconque des revendications 1 à 4, dans lequel l'âme (43) est réalisée sous forme cintrée dans un plan perpendiculaire à la direction longitudinale de la première et de la deuxième branche (40, 41).

6. Insert d'expansion selon l'une quelconque des revendications 1 à 5, dans lequel la première et la deuxième branche (40, 41) font saillie au moins approximativement perpendiculairement depuis l'âme (43).

7. Insert d'expansion selon l'une quelconque des revendications 1 à 6, dans lequel la troisième branche (42) s'étend suivant un angle aigu par rapport à la deuxième branche (41).

8. Insert d'expansion selon l'une quelconque des revendications 1 à 7, dans lequel la troisième branche (42) est plus courte que la première et la deuxième branche (40, 41).

9. Insert d'expansion selon l'une quelconque des revendications 1 à 8, dans lequel la troisième branche (42) s'étend sur au moins deux tiers de la longueur de l'insert d'expansion.

10. Insert d'expansion selon l'une quelconque des revendications 1 à 9, dans lequel la deuxième branche (41) est plus longue que la première branche (40).
